# EUROPEAN PATENT APPLICATION

(11) **EP 3 882 003 A1**
(43) Date of publication of application: **22.09.2021**
(21) Application number: 20163241.1
(22) Date of filing: 16.03.2020
(51) Int. Cl.: B29C 64/118, B33Y 80/00, B33Y 10/00

(54) **3D PRINTED ITEM WITH SURFACE WITH OPENING**

(71) Applicant: Signify Holding B.V., 5656 AE Eindhoven (NL)
(72) Inventor: The designation of the inventor has not yet been filed
(74) Representative: Verweij, Petronella Daniëlle

(57) **Abstract**

The invention provides a method wherein 3D printed layers are stacked, but wherein at one or more positions one layer (1322) is shifted sideways relative to the other (2322). It looks like a (small) excursion (340). Hence, the one layer (1322) deviates sideways from the layer below (2322) and returns back on the layer below. This may be over a relatively small length. The excursion is chosen such, that there is an opening (354) between the lower layer and the layer that deviates sideways. In this way, a 3D printed item (1) comprising a stack of layers may have (physical) openings, which allow transmission of light. In general, the layer height of the layers is not adapted. The deviations or excursions may be provided in a regular way. This provides a 3D printed with a regular arrangement of openings (354). Note that not each layer of the 3D printed item necessarily includes such deviations or excursions.

## Description

### FIELD OF THE INVENTION

The invention relates to a method for manufacturing a 3D (printed) item. The invention also relates to the 3D (printed) item obtainable with such method. Further, the invention relates to a lighting device including such 3D (printed) item.

### BACKGROUND OF THE INVENTION

The 3D printing articles including spatially different properties is known in the art. US2018/0093412, for instance, describes a method of printing a 3D article comprising selectively depositing a first portion of build material in a fluid state onto a substrate to form a first region of build material; selectively depositing a first portion of support material in a fluid state to form a first region of support material; and selectively depositing a second portion of build material in a fluid state to form a second region of build material, wherein the first region of support material is disposed between the first region of build material and the second region of build material in a z-direction of the article. In some cases, the first region of support material forms a grayscale pattern and/or a CMY color pattern in combination with the first region of build material and/or the second region of build material.

### SUMMARY OF THE INVENTION

Within the next 10-20 years, digital fabrication will increasingly transform the nature of global manufacturing. One of the aspects of digital fabrication is 3D printing. Currently, many different techniques have been developed in order to produce various 3D printed objects using various materials such as ceramics, metals and polymers. 3D printing can also be used in producing molds which can then be used for replicating objects.

For the purpose of making molds, the use of polyjet technique has been suggested. This technique makes use of layer by layer deposition of photo-polymerisable material which is cured after each deposition to form a solid structure. While this technique produces smooth surfaces the photo curable materials are not very stable, and they also have relatively low thermal conductivity to be useful for injection molding applications.

The most widely used additive manufacturing technology is the process known as Fused Deposition Modeling (FDM). Fused deposition modeling (FDM) is an additive manufacturing technology commonly used for modeling, prototyping, and production applications. FDM works on an "additive" principle by laying down material in layers; a plastic filament or metal wire is unwound from a coil and supplies material to produce a part. Possibly, (for thermoplastics for example) the filament is melted and extruded before being laid down. FDM is a rapid prototyping technology. Other terms for FDM are "fused filament fabrication" (FFF) or "filament 3D printing" (FDP), which are considered to be equivalent to FDM. In general, FDM printers use a thermoplastic filament, which is heated to its melting point and then extruded, layer by layer, (or in fact filament after filament) to create a three-dimensional object. FDM printers are relatively fast, low cost and can be used for printing complicated 3D objects. Such printers are used in printing various shapes using various polymers. The technique is also being further developed in the production of LED luminaires and lighting solutions.

It appears desirable to provide alternative 3D items, which may be stronger, or which may have a decorative surface, or which may be transmissive for visible light. It may be desirable to provide a 3D item that is transmissive for visible light, wherein the transmissivity may be controlled. It may also be desirable to provide a 3D item that is transmissive for visible light, but which may have a reduced glare. Hence, it is an aspect of the invention to provide an alternative 3D printing method and/or 3D (printed) item which preferably further at least partly obviate(s) one or more of above-described drawbacks. The present invention may have as object to overcome or ameliorate at least one of the disadvantages of the prior art, or to provide a useful alternative.

Amongst others, herein it is suggested using in embodiments a method for giving to the surface of the 3D printed item a fabric/ knitwear appearance. For this purpose, amongst others it is suggested using printing strategies where the printer head moves continuously without stopping along a smooth line while oscillating in the print plane (xy) about the line. In specific embodiments, an amplitude of the oscillation A may be large enough to produce loops but in specific embodiments not too large to give the surface an untidy appearance.

Hence, in a first aspect the invention provides a method for producing a 3D item ("3D printed item" or "item") by means of fused deposition modelling, the method comprising a 3D printing stage comprising layer-wise depositing 3D printable material to provide the 3D item comprising 3D printed material. Especially, deposition may be done on a receiver item. Especially, the 3D item comprises a plurality of layers of 3D printed material. In embodiments, the plurality of layers comprises a stack of a first layer and a second layer. Especially, the first layer and the second layer are configured adjacent to each other, especially essentially on top of each other (i.e. within the stack and on top of each other). Further, especially the method may comprise: 3D printing the first layer and subsequently the second layer along (respective) print paths while providing one or more print path deviations in an xy-plane in at least one of the first and second layers relative the (respective) the print path. Especially, in this way one or more openings between the first and second layers may be defined (due to these deviations). Hence, especially the invention provides in embodiments a method for producing a 3D item by means of fused deposition modelling, the method comprising a 3D printing stage comprising layer-wise depositing 3D printable material to provide the 3D item comprising 3D printed material, wherein the 3D item comprises a plurality of layers of 3D printed material, wherein the plurality of layers comprises a stack of a first layer and a second layer, which are configured adjacent to each other, wherein the method comprises 3D printing the first layer and subsequently the second layer along the print paths while providing one or more print path deviations in an xy-plane in at least one of the first and second layers relative the print path, thereby defining one or more openings between the first and second layers .

In this way, amongst others a 3D printed item with surface with a woven appearance may be provided, such as a fabric/ knitwear appearance. The layered structure may be relatively stable but may nevertheless have transmission for light. The shape and/or appearance of the structure may be controlled by controlling the length, width, number, and patterns of the deviations. Hence, in this way a (decorative) luminaire with a surface having a woven appearance may be provided. Further, with the present solution the internal buildup of stress may be reduced. Hence, overall stress in the printed object may be lower.

As indicated above, the invention provides a method for producing a 3D item by means of fused deposition modelling. Especially, the method comprises a 3D printing stage comprising layer-wise depositing 3D printable material to provide the 3D item comprising 3D printed material. This 3D printed material may be provided on a receiver item. Providing the 3D printed material on the receiver item also includes providing the 3D printed material on already 3D printed material on the receiver item.

The thus provided 3D item comprises a plurality of layers of 3D printed material. The plurality of layers comprises a stack layers. Hence, two or more of the plurality of layers, or at least parts of each of the two or more of the plurality of layers may define the stack of layers 322. This stack of layers comprises (at least) a first layer and a second layer, which are configured adjacent to each other. Here, the adjacent layers especially refer to stacked layers, where one layer has been deposited on top of another layer. In this way, by layer-wise depositing, a plurality of layers may be generated which are configured in a stack, and wherein each layer has one or two adjacent layers.

Especially, the method comprises 3D printing the first layer and subsequently the second layer along (respective) print paths while providing one or more print path deviations in an xy-plane in at least one of the first and second layers relative the (respective) the print path. The layer with deviations can be considered the result of a print path to define a layer of the stack, with in addition to the print path, one or more deviations. On a larger scale, a stack may define a wall ("wall element"). Each layer may have an average path, which are essentially in the plane of the wall element. One or more of such layers may have one or more deviations. In a kind of analogy, the print path may be considered a weft. Then, warps are the deviations from the weft. Note however, that in the present invention this analogy is not completely correct, as the 3D printed material follows in average the print path with one or more deviations thereof, whereas in weaving warps and wefts are different strings. Instead of the term "deviation" also the term "modulation" may be applied. Hence, modulations on the print path(s) may be provided, which may provide the openings.

Would the deviations be small, like less than the width of the layer, then for a layer essentially on top of another layer having no deviations (i.e. fully conformal except for the deviation), there may essentially be no opening between the layers. An opening can be created when the deviation is larger. However, an opening can also be created when the deviation is smaller, but the other layer also has a deviation, but in an opposite direction (relative to its print path). For instance, two deviations of at least halve the width of the layer in respective layers on top of each other, or even larger than halve the width of the layer, both deviations at the same x,y position of the print path, but in opposite directions, may also provide an opening between the layers. Hence, the deviations are chosen such, that there is an opening between the layers at the position of the deviation(s). Therefore, the method especially comprises 3D printing the first layer and subsequently the second layer along the print paths while providing one or more print path deviations in an xy-plane in at least one of the first and second layers relative the print path, thereby defining one or more openings between the first and second layers . Hence, at the position of the deviation(s) the adjacent layers are not fully conformal. However, at other positions the adjacent layers may essentially be fully conformal. However, it is herein not excluded that one layer, more especially, a print path, is at one or more positions shifted in the x-direction and/or y-direction, relative to the other layer, more especially print path, e.g. to create a curved wall element.

As indicated above, the invention provides a method for producing a 3D item ("3D printed item", "item") by means of fused deposition modelling. This method will further be explained below, especially with some embodiments.

The one or more print path deviations may have an amplitude (D) relative to the (respective) print path.

As can be derived from the above, a too small deviation may not lead to an opening. Though small deviations are not excluded, at least one or more deviations are chosen such, optionally in the adjacent layers, that the resulting configuration of the layers provides one or more openings at one or more deviations. On the other hand, the deviations may not be extremely large, as otherwise there may be risk of deviations bending too much under gravity and/or becoming vulnerable to damage. Deviations protruding too much may more easily be damaged. In specific embodiments W≤D≤10^{∗}W may apply, such as especially W<D≤10^{∗}W, like in specific embodiments W<D≤5^{∗}W. In (other) specific embodiments 1.25^{∗}W≤D≤10^{∗}W may apply, such as 1.25^{∗}W≤D≤5^{∗}W. However, as two deviations in adjacent layers together may also provide an opening, more in general in embodiments the following may apply: 0.5^{∗}W≤D≤10^{∗}W, such as W<D≤10^{∗}W, like W<D≤10^{∗}W, even more especially 1.25^{∗}W≤D≤10^{∗}W, such as 1.25^{∗}W≤D≤5^{∗}W.

As indicated below, especially the width (thickness) and height of (individually 3D printed) layers may e.g. in embodiments be selected from the range of 100 - 5000 µm, such as 200-2500 µm, with the height in general being smaller than the width.

Further, in general the deviations may only deviate over part of the length of the print path. Such length may be indicated with a deviation width at half amplitude. For each deviation may apply: 0.1^{∗}W≤W1≤20^{∗}W, especially 0.5^{∗}W≤W1≤20^{∗}W, such as W≤W1≤15^{∗}W, like e.g. W≤W1≤10^{∗}W. Different deviations may have identical deviation widths. However, two or more deviations may also have essentially different deviation widths.

Therefore, in embodiments the layers have a layer width (W), wherein the one or more print path deviations have an amplitude (D) relative to the (respective) print path, and wherein W<D≤10^{∗}W, especially W<D≤10^{∗}W, wherein the one or more deviations have deviation widths (W1) at half amplitudes (D), wherein 0.1^{∗}W≤W1≤20^{∗}W.

Note that it is not necessary that all layers have the same layer width. Neither is it necessary that all layers have the same layer height. Herein, when referring to the first and second layers, in general these layers may have essentially the same layer heights and essentially the same layer widths. However, would these differ or would especially the layer width differ, then the herein defined embodiments in relation to the amplitude and deviation width are related to the width of the respective layer. It is also not excluded that the layer width and/or layer height differ over the length of the respective layer. Herein, when referring to the first and second layers, in general these layers may have an essentially constant layer width and/or essentially constant layer height (over the respective layer length). Would this not be the case, an average value at the location of the respective deviation may be chosen.

Note that herein "first" only is used to indicate a layer, but this "first" does not mean that this layer is 3D printed first. Further, there can be a plurality of (different) first layers and (different) second layers (see also below).

In embodiments, one or more of the layers may comprise a plurality of deviations. These may be arranged at one side, or these may be arranged at two sides.

Further, the deviations may be configured in an arrangement. The arrangement may be a regular arrangement. Alternatively, the arrangement may be an irregular arrangement, such as obtainable via a random process or a pseudorandom process. The arrangement may also be a combination of an irregular and regular arrangement. A regular arrangement may provide a better control of light transmission than random arrangements, though on larger scales, this may even out. Hence, in embodiments the method may (further) comprise 3D printing at least one of the first and second layers with a plurality of deviations, wherein (i) two or more of the print path deviations are configured symmetrical relative to the (respective) print path, and/or (ii) two or more of the print path deviations are configured asymmetrical relative to the (respective) print path.

The shape of the deviation may be a curved shape or a shape with angles, like a triangular or block shape. Other shapes may be possible as well. Further, when a plurality of deviations are available, these may be provided in different ways. For instance, in embodiments the method may comprise 3D printing at least one of the first and second layers with a plurality of print path deviations in one or more of a block-shape way, in a zig-zag way, and in a meandering way. For course, also combinations of two or more of these may be applied. This may in embodiments e.g. provide a trapezium type shape.

When a plurality of deviations are available in a layer, these deviations may be configured in a regular arrangement, such as having a predefined pitch. Hence, in embodiments the layers may have a layer width (W) (see also above), and the method may comprise 3D printing at least one of the first and second layers with a plurality of print path deviations having a first pitch PI, and wherein 2^{∗}W≤P1≤20^{∗}W, such as 2.5^{∗}W≤P1≤15^{∗}W, like in embodiments 2.5^{∗}W≤P1≤10^{∗}W.

Note that when there are more than two layers in the stack, the first and the second layer may be chosen by way of example. There may be a plurality of sets of such first layer and second layer, which sets may be the same or which may be identical. The layers with deviations may be configured in a regular arrangement or an irregular arrangement, or a combination of both.

A layer with deviations may be adjacent to one or two layers having no deviations (like the former being sandwiched between the latter two). In yet other embodiments, a layer with deviations may be adjacent to one layer with deviations and adjacent to another layer without deviations. In yet other embodiments, a layer with deviations may be adjacent to two other layers with deviations (like the former being sandwiched between the latter two).

In embodiments, the stack (see also below) may comprise a plurality of first sets, wherein each set comprises a layer with deviations adjacent to one or two layers having no deviations. Alternatively or additionally, in embodiments the stack may comprise a plurality of second sets, wherein each second set comprises a layer with deviations adjacent to one layer having no deviations and adjacent to one layer having deviations. Yet further alternatively or additionally, in embodiments the stack may comprise a plurality of second sets, wherein each second set comprises a layer with deviations adjacent to two layers having deviations.

In embodiments, the method may comprise 3D printing two or more layers each with a plurality of print path deviations, wherein the print path deviations of at least two of the two or more layers are shifted relative to each other. This shift may especially be determined along one of the print paths. Would the deviations not be shifted, at essentially the same positions along the print paths, the deviations in the two or more layers may be positioned (especially when the pitches are essentially identical and would the deviations essentially identical in amplitude and width). Hence, in embodiments the shift may be x^{∗}P1, wherein PI is the pitch of one of the layers and the shift relates to the arrangement of the deviations in another layer, which may be positioned at shifted positions (relative to the reference layer with the shift PI) with the shift value x^{∗}P1, wherein x is not an integer value (especially larger than 0 and smaller than 1). Especially, in such embodiments the pitches of the deviations of the first layer and of the deviations of the second are essentially identical and the deviations of the first layer and of the deviations of the second may essentially be identical in amplitude and in width.

Arrangements of deviations may be in a plurality of layers. It may be desirable, or in some embodiments even necessary, that all deviations are not on top of each other. Would all deviations on top of one another along the entire stack, then there may be no opening. Hence, the deviations may especially be configured such, that they create openings. This may be obtained by shifting the deviations of one layer relative to an adjacent layer. Alternatively or additionally, this may be done by alternating layers with and without deviations. Hence, in embodiments the method may comprise 3D printing two or more layers each with a plurality of print path deviations, wherein the layers have a layer height (H), wherein for a set of two layers, which are nearest neighboring layers of each other, each with the plurality of print path deviations, applies one or more of: (i) the deviations of both of the layers have a same first pitch PI, but the print path deviations of the layers are shifted relative to each other, and (ii) nearest neighboring print path deviations in different layers of the set of two layers have a mutual distance (d1) of at least the layer height (H).

Hence, the openings may especially not be created by providing an opening in the z-direction between two layers, but by providing an offset of one layer relative to the other by which a slanted channel may be created between two layers which are on top of each other, but wherein part of the layer of at least one of the layer is offset in the xy-plane (projection) relative to part of the other layer. In this way, between this part a channel is provided.

The invention may also allow a continuous printing. Therefore, in embodiments the method may comprises a continuous 3D printing of the at least one of the first and second layers with the one or more print path deviations.

For instance, in this way at least 10 layers, such as at least 13 layers, like at least 15 layers may be comprised in the herein described stack. One or more of these, especially at least about halve of these layers, such as at least 5 layers, such as at least 6 layers, like at least 7 layers, may comprise the herein described deviations.

In the herein described invention, wall elements may be provided that allow transmission of light from one side of the wall element to the other side of the wall element. This may e.g. be useful for lamp housings or shades (see also below). Hence, in embodiments the 3D item comprises an item wall, wherein the item wall comprises the plurality of layers of 3D printed material, wherein the method may comprise providing a plurality of layers with a plurality of print path deviations in a (regular) arrangement to provide a (regular) arrangement of openings between both sides of the item wall.

The openings may provide channels from one side to the other. Hence, in embodiments the openings in the wall element may provide channels. Instead of the term "wall element" also the term "wall" may be applied. The term "item wall" may thus refer to a wall (element) of a 3D printed item.

Especially, in embodiment the 3D item may be used for optical applications wherein it may be desirable that at least part of the 3D item is transmissive for visible light, be it natural light or artificial light.

The phrase at least part of the visible light of the visible light (which is essentially in the range of 380-780 nm) may refer to one or more of (i) that one or more wavelengths are transmitted and (ii) at such wavelengths less than 100% but more than 0%, such as at least 50% of the light may be transmitted. Especially transmission may be measured under perpendicular irradiation. Here, the transmission is especially due to the openings. Alternatively, part of the transmission may also be due to using 3D printable material (and thus 3D printed material) that is light transmissive. The transmission or light permeability can be determined by providing light at a specific wavelength with a first intensity to the material and relating the intensity of the light at that wavelength measured after transmission through the material, to the first intensity of the light provided at that specific wavelength to the material (see also E-208 and E-406 of the CRC Handbook of Chemistry and Physics, 69th edition, 1088-1989).

As indicated above, the method comprises depositing during a printing stage 3D printable material. Herein, the term "3D printable material" refers to the material to be deposited or printed, and the term "3D printed material" refers to the material that is obtained after deposition. These materials may be essentially the same, as the 3D printable material may especially refer to the material in a printer head or extruder at elevated temperature and the 3D printed material refers to the same material, but in a later stage when deposited. The 3D printable material is printed as a filament and deposited as such. The 3D printable material may be provided as filament or may be formed into a filament. Hence, whatever starting materials are applied, a filament comprising 3D printable material is provided by the printer head and 3D printed. The term "extrudate" may be used to define the 3D printable material downstream of the printer head, but not yet deposited. The latter is indicated as "3D printed material". In fact, the extrudate comprises 3D printable material, as the material is not yet deposited. Upon deposition of the 3D printable material or extrudate, the material is thus indicated as 3D printed material. Essentially, the materials are the same material, as the thermoplastic material upstream of the printer head, downstream of the printer head, and when deposited, is essentially the same material.

Herein, the term "3D printable material" may also be indicated as "printable material. The term "polymeric material" may in embodiments refer to a blend of different polymers, but may in embodiments also refer to essentially a single polymer type with different polymer chain lengths. Hence, the terms "polymeric material" or "polymer" may refer to a single type of polymers but may also refer to a plurality of different polymers. The term "printable material" may refer to a single type of printable material but may also refer to a plurality of different printable materials. The term "printed material" may refer to a single type of printed material but may also refer to a plurality of different printed materials.

Hence, the term "3D printable material" may also refer to a combination of two or more materials. In general, these (polymeric) materials have a glass transition temperature T_{g} and/or a melting temperature Tₘ. The 3D printable material will be heated by the 3D printer before it leaves the nozzle to a temperature of at least the glass transition temperature, and in general at least the melting temperature. Hence, in a specific embodiment the 3D printable material comprises a thermoplastic polymer having a glass transition temperature (T_{g}) and /or a melting point (Tₘ), and the printer head action comprises heating the 3D printable material above the glass transition and if it is a semi-crystalline polymer above the melting temperature. In yet another embodiment, the 3D printable material comprises a (thermoplastic) polymer having a melting point (Tₘ), and the printer head action comprises heating the 3D printable material to be deposited on the receiver item to a temperature of at least the melting point. The glass transition temperature is in general not the same thing as the melting temperature. Melting is a transition which occurs in crystalline polymers. Melting happens when the polymer chains fall out of their crystal structures, and become a disordered liquid. The glass transition is a transition which happens to amorphous polymers; that is, polymers whose chains are not arranged in ordered crystals, but are just strewn around in any fashion, even though they are in the solid state. Polymers can be amorphous, essentially having a glass transition temperature and not a melting temperature or can be (semi) crystalline, in general having both a glass transition temperature and a melting temperature, with in general the latter being larger than the former. The glass temperature may e.g. be determined with differential scanning calorimetry. The melting point or melting temperature can also be determined with differential scanning calorimetry.

As indicated above, the invention thus provides a method comprising providing a filament of 3D printable material and printing during a printing stage said 3D printable material on a substrate, to provide said 3D item.

Materials that may especially qualify as 3D printable materials may be selected from the group consisting of metals, glasses, thermoplastic polymers, silicones, etc. Especially, the 3D printable material comprises a (thermoplastic) polymer selected from the group consisting of ABS (acrylonitrile butadiene styrene), Nylon (or polyamide), Acetate (or cellulose), PLA (poly lactic acid), terephthalate (such as PET polyethylene terephthalate), Acrylic (polymethylacrylate, Perspex, polymethylmethacrylate, PMMA), Polypropylene (or polypropene), Polycarbonate (PC), Polystyrene (PS), PE (such as expanded- high impact-Polythene (or polyethene), Low density (LDPE) High density (HDPE)), PVC (polyvinyl chloride) Polychloroethene, such as thermoplastic elastomer based on copolyester elastomers, polyurethane elastomers, polyamide elastomers polyolefine based elastomers, styrene based elastomers, etc.. Optionally, the 3D printable material comprises a 3D printable material selected from the group consisting of Urea formaldehyde, Polyester resin, Epoxy resin, Melamine formaldehyde, thermoplastic elastomer, etc... Optionally, the 3D printable material comprises a 3D printable material selected from the group consisting of a polysulfone. Elastomers, especially thermoplastic elastomers, are especially interesting as they are flexible and may help obtaining relatively more flexible filaments comprising the thermally conductive material. A thermoplastic elastomer may comprise one or more of styrenic block copolymers (TPS (TPE-s)), thermoplastic polyolefin elastomers (TPO (TPE-o)), thermoplastic vulcanizates (TPV (TPE-v or TPV)), thermoplastic polyurethanes (TPU (TPU)), thermoplastic copolyesters (TPC (TPE-E)), and thermoplastic polyamides (TPA (TPE-A)).

Suitable thermoplastic materials, such as also mentioned in WO2017/040893, may include one or more of polyacetals (e.g., polyoxyethylene and polyoxymethylene), poly(C₁₋₆ alkyl)acrylates, polyacrylamides, polyamides, (e.g., aliphatic polyamides, polyphthalamides, and polyaramides), polyamideimides, polyanhydrides, polyarylates, polyarylene ethers (e.g., polyphenylene ethers), polyarylene sulfides (e.g., polyphenylene sulfides), polyarylsulfones (e.g., polyphenylene sulfones), polybenzothiazoles, polybenzoxazoles, polycarbonates (including polycarbonate copolymers such as polycarbonate-siloxanes, polycarbonate-esters, and polycarbonate-ester-siloxanes), polyesters (e.g., polycarbonates, polyethylene terephthalates, polyethylene naphtholates, polybutylene terephthalates, polyarylates), and polyester copolymers such as polyester-ethers), polyetheretherketones, polyetherimides (including copolymers such as polyetherimide-siloxane copolymers), polyetherketoneketones, polyetherketones, polyethersulfones, polyimides (including copolymers such as polyimide- siloxane copolymers), poly(C₁₋₆ alkyl)methacrylates, polymethacrylamides, polynorbornenes (including copolymers containing norbornenyl units), polyolefins (e.g., polyethylenes, polypropylenes, polytetrafluoroethylenes, and their copolymers, for example ethylene- alpha- olefin copolymers), polyoxadiazoles, polyoxymethylenes, polyphthalides, polysilazanes, polysiloxanes, polystyrenes (including copolymers such as acrylonitrile-butadiene-styrene (ABS) and methyl methacrylate-butadiene-styrene (MBS)), polysulfides, polysulfonamides, polysulfonates, polysulfones, polythioesters, polytriazines, polyureas, polyurethanes, polyvinyl alcohols, polyvinyl esters, polyvinyl ethers, polyvinyl halides, polyvinyl ketones, polyvinyl thioethers, polyvinylidene fluorides, or the like, or a combination comprising at least one of the foregoing thermoplastic polymers. Embodiments of polyamides may include, but are not limited to, synthetic linear polyamides, e.g., Nylon-6,6; Nylon-6,9; Nylon-6,10; Nylon-6,12; Nylon-11; Nylon-12 and Nylon-4,6, preferably Nylon 6 and Nylon 6,6, or a combination comprising at least one of the foregoing. Polyurethanes that can be used include aliphatic, cycloaliphatic, aromatic, and polycyclic polyurethanes, including those described above. Also useful are poly(C₁₋₆ alkyl)acrylates and poly(C₁₋₆ alkyl)methacrylates, which include, for instance, polymers of methyl acrylate, ethyl acrylate, acrylamide, methacrylic acid, methyl methacrylate, n-butyl acrylate, and ethyl acrylate, etc. In embodiments, a polyolefine may include one or more of polyethylene, polypropylene, polybutylene, polymethylpentene (and co-polymers thereof), polynorbornene (and co-polymers thereof), poly 1-butene, poly(3-methylbutene), poly(4-methylpentene) and copolymers of ethylene with propylene, 1-butene, 1-hexene, 1-octene, 1-decene, 4-methyl-1-pentene and 1-octadecene.

In specific embodiments, the 3D printable material (and the 3D printed material) comprise one or more of polycarbonate (PC), polyethylene (PE), high-density polyethylene (HDPE), polypropylene (PP), polyoxymethylene (POM), polyethylene naphthalate (PEN), styrene-acrylonitrile resin (SAN), polysulfone (PSU), polyphenylene sulfide (PPS), and semi-crystalline polytethylene terephthalate (PET), acrylonitrile butadiene styrene (ABS), poly(methyl methacrylate) (PMMA), polystyrene (PS), and styrene acrylic copolymers (SMMA).

The term 3D printable material is further also elucidated below, but especially refers to a thermoplastic material, optionally including additives, to a volume percentage of at maximum about 60%, especially at maximum about 30 vol.%, such as at maximum 20 vol.% (of the additives relative to the total volume of the thermoplastic material and additives).

The printable material may thus in embodiments comprise two phases. The printable material may comprise a phase of printable polymeric material, especially thermoplastic material (see also below), which phase is especially an essentially continuous phase. In this continuous phase of thermoplastic material polymer additives such as one or more of antioxidant, heat stabilizer, light stabilizer, ultraviolet light stabilizer, ultraviolet light absorbing additive, near infrared light absorbing additive, infrared light absorbing additive, plasticizer, lubricant, release agent, antistatic agent, anti-fog agent, antimicrobial agent, colorant, laser marking additive, surface effect additive, radiation stabilizer, flame retardant, anti-drip agent may be present. The additive may have useful properties selected from optical properties, mechanical properties, electrical properties, thermal properties, and mechanical properties (see also above).

The printable material in embodiments may comprise particulate material, i.e. particles embedded in the printable polymeric material, which particles form a substantially discontinuous phase. The number of particles in the total mixture is especially not larger than 60 vol.%, relative to the total volume of the printable material (including the (anisotropically conductive) particles) especially in applications for reducing thermal expansion coefficient. For optical and surface related effect number of particles in the total mixture is equal to or less than 20 vol.%, such as up to 10 vol.%, relative to the total volume of the printable material (including the particles). Hence, the 3D printable material especially refers to a continuous phase of essentially thermoplastic material, wherein other materials, such as particles, may be embedded. Likewise, the 3D printed material especially refers to a continuous phase of essentially thermoplastic material, wherein other materials, such as particles, are embedded. The particles may comprise one or more additives as defined above. Hence, in embodiments the 3D printable materials may comprises particulate additives.

The printable material is printed on a receiver item. Especially, the receiver item can be the building platform or can be comprised by the building platform. The receiver item can also be heated during 3D printing. However, the receiver item may also be cooled during 3D printing.

The phrase "printing on a receiver item" and similar phrases include amongst others directly printing on the receiver item, or printing on a coating on the receiver item, or printing on 3D printed material earlier printed on the receiver item. The term "receiver item" may refer to a printing platform, a print bed, a substrate, a support, a build plate, or a building platform, etc... Instead of the term "receiver item" also the term "substrate" may be used. The phrase "printing on a receiver item" and similar phrases include amongst others also printing on a separate substrate on or comprised by a printing platform, a print bed, a support, a build plate, or a building platform, etc... Therefore, the phrase "printing on a substrate" and similar phrases include amongst others directly printing on the substrate, or printing on a coating on the substrate or printing on 3D printed material earlier printed on the substrate. Here below, further the term substrate is used, which may refer to a printing platform, a print bed, a substrate, a support, a build plate, or a building platform, etc., or a separate substrate thereon or comprised thereby.

Layer by layer printable material is deposited, by which the 3D printed item is generated (during the printing stage). The 3D printed item may show a characteristic ribbed structures (originating from the deposited filaments). However, it may also be possible that after a printing stage, a further stage is executed, such as a finalization stage. This stage may include removing the printed item from the receiver item and/or one or more post processing actions. One or more post processing actions may be executed before removing the printed item from the receiver item and/or one more post processing actions may be executed after removing the printed item from the receiver item. Post processing may include e.g. one or more of polishing, coating, adding a functional component, etc... Post-processing may include smoothening the ribbed structures, which may lead to an essentially smooth surface.

Further, the invention relates to a software product that can be used to execute the method described herein. Therefore, in yet a further aspect the invention also provides a computer program product, when running on a computer which is functionally coupled to or comprised by a fused deposition modeling 3D printer, is capable of bringing about the method as described herein.

Hence, in an aspect the invention (thus) provides a software product, which, when running on a computer is capable of bringing about (one or more embodiments of) the method (for producing a 3D item by means of fused deposition modelling) as described herein.

The herein described method provides 3D printed items. Hence, the invention also provides in a further aspect a 3D printed item obtainable with the herein described method. In a further aspect a 3D printed item obtainable with the herein described method is provided. Especially, the invention provides in an aspect a 3D item comprising 3D printed material, wherein the 3D item comprises a plurality of layers of 3D printed material. Especially, the plurality of layers comprises a stack of a first layer and a second layer. Hence, a stack may be defined by at least two of the layers. The first layer and the second layer are especially configured adjacent to each other. Relative to a projection on an xy-plane of the first and second layers at least one of the first and second layers defines one or more layer deviations protruding relative to the other of the first and second layers . In this way, one or more openings between the first and second layers are defined. Hence, in embodiments the invention provides a 3D item comprising 3D printed material, wherein the 3D item comprises a plurality of layers of 3D printed material, wherein the plurality of layers comprises a stack of a first layer and a second layer, which are configured adjacent to each other, wherein relative to a projection on an xy-plane of the first and second layers at least one of the first and second layers defines one or more layer deviations protruding relative to the other of the first and second layers , thereby defining one or more openings between the first and second layers . The 3D item may comprise a plurality of openings, such as in average at least 1 per layer, like at least 2 per layers, even more especially at least 5 per layer, such as at least 7, like even more especially at least 10.

The openings may be used as physical openings (or channels) for allowing transmission of (visible) light. Alternatively or additionally, the openings may be used for transport of air, or another gas. In this way, also heat may be transported via the openings. Hence, the openings may also be used for improving thermal management, such as may be used when the 3D item is applied in a lighting device or luminaire, etc..

Especially, a 3D item may comprise at least 40 of such openings, even more especially at least 60, such as yet even more especially at least 70. This may provide a desirable optical effect. Further, it may provide a desirable appealing optical effect.

The 3D item may comprise at least one first layer and at least one second layer. Especially, however, the 3D item may comprise a least 5, even more especially at least 8, like yet even more especially at least 10 first layers and second layers.

The 3D printed item may comprise a plurality of layers on top of each other, i.e. stacked layers. The width (thickness) and height of (individually 3D printed) layers may e.g. in embodiments be selected from the range of 100 - 5000 µm, such as 200-2500 µm, with the height in general being smaller than the width. For instance, the ratio of height and width may be equal to or smaller than 0.8, such as equal to or smaller than 0.6.

Layers may be core-shell layers or may consist of a single material. Within a layer, there may also be a change in composition, for instance when a core-shell printing process was applied and during the printing process it was changed from printing a first material (and not printing a second material) to printing a second material (and not printing the first material).

At least part of the 3D printed item may include a coating.

Some specific embodiments in relation to the 3D printed item have already been elucidated above when discussing the method. Below, some specific embodiments in relation to the 3D printed item are discussed in more detail.

As indicated above, in embodiments, wherein the layers have a layer width (W), wherein the at least one of the first and second layers defining the one or more layer deviations comprises a stack axis (SA) in the projection on the xy-plane, wherein the one or more deviations have an amplitude (D) relative to the stack axis (SA) in the projection on the xy-plane (SA). Especially, in embodiments wherein 0.5^{∗}W≤D≤10^{∗}W, such as W<D≤10^{∗}W, such as W<D≤10^{∗}W, even more especially 1.25^{∗}W≤D≤10^{∗}W, such as 1.25^{∗}W≤D≤5^{∗}W. The stack axes together may define a (flat or curved) plane (or (planar or non-planar) (cross-sectional) face.

Further, in embodiments the at least one of the first and second layers comprises a plurality of layer deviations. In specific embodiments, two or more of the layer deviations are configured symmetrical relative to the stack axis (SA), and/or two or more of the layer deviations are configured asymmetrical relative to the stack axis (SA). Further, in embodiments a plurality of the layer deviations may be configured in one or more of a block-shape arrangement, in a zig-zag arrangement, and in a meandering arrangement (see also above). Further, as can be derived from the above, in specific embodiments the (at least one of the first and second layers comprises a) plurality of the layer deviations have a first pitch PI. Especially, in embodiments 2^{∗}W≤P1≤20^{∗}W, such as 2.5^{∗}W≤P1≤15^{∗}W, like in embodiments 2.5^{∗}W≤P1≤10^{∗}W.

Yet further, in embodiments the 3D item may comprise two or more layers each with a plurality of layer deviations, wherein the layer deviations of at least two of the two or more layers are shifted relative to each other.

Yet further, in embodiments wherein two or more layers each comprise a plurality of layer deviations, the layers may have a layer height (H), wherein for a set of two layers each with the plurality of layer deviations which are nearest neighboring layers of each other applies one or more of: (i) the layer deviations of both of the layers have a same first pitch PI, but the layer deviations of the layers are shifted relative to each other, and (ii) nearest neighboring layer deviations in different layers of the set of two layers have a mutual distance (d1) of at least the layer height (H). Especially, in these embodiments the pitches may essentially be identical (though this is not necessarily the case). Further, especially in these embodiments the layer width of the first layer(s) and the second layer(s) may essentially be identical (though this is not necessarily the case). Further, especially in these embodiments the layer height of the first layer(s) and the second layer(s) may essentially be identical (though this is not necessarily the case). Further, especially in these embodiments the amplitudes of the deviations are essentially the same (though this is not necessarily the case).

The (with the herein described method) obtained 3D printed item may be functional *per se.* The thus obtained 3D item may (alternatively) be used for decorative or artistic purposes. The 3D printed item may include or be provided with a functional component. The functional component may especially be selected from the group consisting of an optical component, an electrical component, and a magnetic component. The term "optical component" especially refers to a component having an optical functionality, such as a lens, a mirror, a light transmissive element, an optical filter, etc... The term optical component may also refer to a light source (like a LED). The term "electrical component" may e.g. refer to an integrated circuit, PCB, a battery, a driver, but also a light source (as a light source may be considered an optical component and an electrical component), etc. The term magnetic component may e.g. refer to a magnetic connector, a coil, etc... Alternatively, or additionally, the functional component may comprise a thermal component (e.g. configured to cool or to heat an electrical component). Hence, the functional component may be configured to generate heat or to scavenge heat, etc...

As indicated above, the 3D printed item maybe used for different purposes. Amongst others, the 3D printed item maybe used in lighting. Hence, in yet a further aspect the invention also provides a lighting device comprising the 3D item as defined herein. In a specific aspect the invention provides a lighting system comprising (a) a light source configured to provide (visible) light source light and (b) the 3D item as defined herein, wherein 3D item may be configured as one or more of (i) at least part of a housing, (ii) at least part of a wall of a lighting chamber, and (iii) a functional component, wherein the functional component may be selected from the group consisting of an optical component, a support, an electrically insulating component, an electrically conductive component, a thermally insulating component, and a thermally conductive component. Hence, in specific embodiments the 3D item may be configured as one or more of (i) at least part of a lighting device housing, (ii) at least part of a wall of a lighting chamber, and (iii) an optical element. As a relative smooth surface may be provided, the 3D printed item may be used as mirror or lens, etc... In embodiments, the 3D item may be configured as shade. A device or system may comprise a plurality of different 3D printed items, having different functionalities.

Returning to the 3D printing process, a specific 3D printer may be used to provide the 3D printed item described herein. Therefore, in yet a further aspect the invention also provides a fused deposition modeling 3D printer, comprising (a) a printer head comprising a printer nozzle, and (b) a 3D printable material providing device configured to provide 3D printable material to the printer head, wherein the fused deposition modeling 3D printer is configured to provide said 3D printable material as described herein.

The printer nozzle may include a single opening. In other embodiments, the printer nozzle may be of the core-shell type, having two (or more) openings. The term "printer head" may also refer to a plurality of (different) printer heads; hence, the term "printer nozzle" may also refer to a plurality of (different) printer nozzles.

The 3D printable material providing device may provide a filament comprising 3D printable material to the printer head or may provide the 3D printable material as such, with the printer head creating the filament comprising 3D printable material. Hence, in embodiments the invention provides a fused deposition modeling 3D printer, comprising (a) a printer head comprising a printer nozzle, and (b) a filament providing device configured to provide a filament comprising 3D printable material to the printer head, wherein the fused deposition modeling 3D printer is configured to provide said 3D printable material to a substrate, as described herein.

Especially, the 3D printer comprises a controller (or is functionally coupled to a controller) that is configured to execute in a controlling mode (or "operation mode") the method as described herein. Instead of the term "controller" also the term "control system" (see e.g. above) may be applied.

The term "controlling" and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system, which may also be indicated as "controller". The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems. A control system may comprise or may be functionally coupled to a user interface. The control system may also be configured to receive and execute instructions form a remote control. In embodiments, the control system may be controlled via an App on a device, such as a portable device, like a Smartphone or I-phone, a tablet, etc.. The device is thus not necessarily coupled to the lighting system, but may be (temporarily) functionally coupled to the lighting system. Hence, in embodiments the control system may (also) be configured to be controlled by an App on a remote device. In such embodiments the control system of the lighting system may be a slave control system or control in a slave mode. For instance, the lighting system may be identifiable with a code, especially a unique code for the respective lighting system. The control system of the lighting system may be configured to be controlled by an external control system which has access to the lighting system on the basis of knowledge (input by a user interface of with an optical sensor (e.g. QR code reader) of the (unique) code. The lighting system may also comprise means for communicating with other systems or devices, such as on the basis of Bluetooth, WIFI, LiFi, ZigBee, BLE or WiMAX, or another wireless technology. The system, or apparatus, or device may execute an action in a "mode" or "operation mode" or "mode of operation". Likewise, in a method an action or stage, or step may be executed in a "mode" or "operation mode" or "mode of operation" or "operational mode". The term "mode" may also be indicated as "controlling mode". This does not exclude that the system, or apparatus, or device may also be adapted for providing another controlling mode, or a plurality of other controlling modes. Likewise, this may not exclude that before executing the mode and/or after executing the mode one or more other modes may be executed. However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability). Hence, in embodiments, the control system may control in dependence of one or more of an input signal of a user interface, a sensor signal (of a sensor), and a timer. The term "timer" may refer to a clock and/or a predetermined time scheme.

Instead of the term "fused deposition modeling (FDM) 3D printer" shortly the terms "3D printer", "FDM printer" or "printer" may be used. The printer nozzle may also be indicated as "nozzle" or sometimes as "extruder nozzle".

In yet a further aspect, the invention also provides a lighting device comprising the 3D item as defined herein, wherein the 3D item is configured as one or more of (i) at least part of a lighting device housing, (ii) at least part of a wall of a lighting chamber, and (iii) an optical element. Hence, the 3D item may be transmissive for part of the visible light. For instance, in this way of at least part of a lighting device housing transmissive for visible light may be provided and/or at least part of a wall of a lighting chamber may be provided that is transmissive for visible light.

In specific embodiments the 3D item comprises an item wall, wherein the item wall comprises the plurality of layers of 3D printed material, wherein the item wall comprises a plurality of openings between both sides of the item wall, wherein the plurality of openings are at least partly defined by a plurality of layer deviations. For instance, there may be at least one opening per 10 cm² (of the item wall), such as at least one opening per 4 cm². In embodiments, there may be not more than 10 openings per cm², such as not more 5 openings, especially not more than about 2 openings per cm²., like in embodiments about 1 opening per cm².

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1a-1c schematically depict some general aspects of the 3D printer and of an embodiment of 3D printed material;
Figs. 2a-2b shows a reference example;
Figs. 3a-3c schematically depicts embodiments;
Figs. 4a-4c schematically depict further embodiments;
Fig. 5 depicts an example; and
Fig. 6 schematically depict applications. The schematic drawings are not necessarily to scale.

### DETAILED DESCRIPTION OF THE EMBODIMENTS

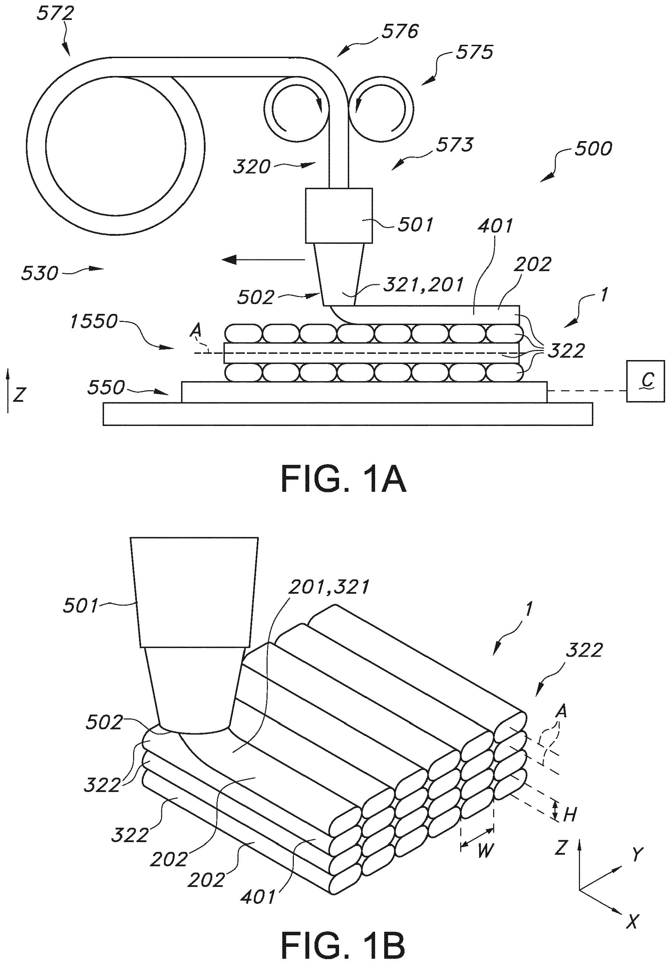

Fig. 1a schematically depicts some aspects of the 3D printer. Reference 500 indicates a 3D printer. Reference 530 indicates the functional unit configured to 3D print, especially FDM 3D printing; this reference may also indicate the 3D printing stage unit. Here, only the printer head for providing 3D printed material, such as an FDM 3D printer head is schematically depicted. Reference 501 indicates the printer head. The 3D printer of the present invention may especially include a plurality of printer heads (see below). Reference 502 indicates a printer nozzle. The 3D printer of the present invention may especially include a plurality of printer nozzles, though other embodiments are also possible. Reference 320 indicates a filament of printable 3D printable material (such as indicated above). For the sake of clarity, not all features of the 3D printer have been depicted, only those that are of especial relevance for the present invention (see further also below). Reference 321 indicates extrudate (of 3D printable material 201).

The 3D printer 500 is configured to generate a 3D item 1 by layer-wise depositing on a receiver item 550, which may in embodiments at least temporarily be cooled, a plurality of layers 322 wherein each layers 322 comprises 3D printable material 201, such as having a melting point Tₘ. The 3D printable material 201 may be deposited on a substrate 1550 (during the printing stage). By deposition, the 3D printable material 201 has become 3D printed material 202. 3D printable material 201 escaping from the nozzle 502 is also indicated as extrudate 321. Reference 401 indicates thermoplastic material.

The 3D printer 500 may be configured to heat the filament 320 material upstream of the printer nozzle 502. This may e.g. be done with a device comprising one or more of an extrusion and/or heating function. Such device is indicated with reference 573, and is arranged upstream from the printer nozzle 502 (i.e. in time before the filament material leaves the printer nozzle 502). The printer head 501 may (thus) include a liquefier or heater. Reference 201 indicates printable material. When deposited, this material is indicated as (3D) printed material, which is indicated with reference 202.

Reference 572 indicates a spool or roller with material, especially in the form of a wire, which may be indicated as filament 320. The 3D printer 500 transforms this in an extrudate 321 downstream of the printer nozzle which becomes a layer 322 on the receiver item or on already deposited printed material. In general, the diameter of the extrudate 321 downstream of the nozzle 502 is reduced relative to the diameter of the filament 322 upstream of the printer head 501. Hence, the printer nozzle is sometimes (also) indicated as extruder nozzle. Arranging layer 322 by layer 322 and/or layer 322t on layer 322, a 3D item 1 may be formed. Reference 575 indicates the filament providing device, which here amongst others include the spool or roller and the driver wheels, indicated with reference 576.

Reference A indicates a longitudinal axis or filament axis or axis of elongation of a layer of 3D printed material 202.

Reference C schematically depicts a control system, such as especially a temperature control system configured to control the temperature of the receiver item 550. The control system C may include a heater which is able to heat the receiver item 550 to at least a temperature of 50 °C, but especially up to a range of about 350 °C, such as at least 200 °C.

Alternatively or additionally, in embodiments the receiver plate may also be moveable in one or two directions in the x-y plane (horizontal plane). Further, alternatively or additionally, in embodiments the receiver plate may also be rotatable about z axis (vertical). Hence, the control system may move the receiver plate in one or more of the x-direction, y-direction, and z-direction.

Alternatively, the printer can have a head can also rotate during printing. Such a printer has an advantage that the printed material cannot rotate during printing.

Layers are indicated with reference 322, and have a layer height H and a layer width W.

Note that the 3D printable material is not necessarily provided as filament 320 to the printer head. Further, the filament 320 may also be produced in the 3D printer 500 from pieces of 3D printable material.

Reference D indicates the diameter of the nozzle (through which the 3D printable material 201 is forced).

Fig. 1b schematically depicts in 3D in more detail the printing of the 3D item 1 under construction. Here, in this schematic drawing the ends of the filaments 321 in a single plane are not interconnected, though in reality this may in embodiments be the case. Reference H indicates the height of a layer. Layers are indicated with reference 203. Here, the layers have an essentially circular cross-section. Often, however, they may be flattened, such as having an outer shape resembling a flat oval tube or flat oval duct (i.e. a circular shaped bar having a diameter that is compressed to have a smaller height than width, wherein the sides (defining the width) are (still) rounded).

Hence, Figs. 1a-1b schematically depict some aspects of a fused deposition modeling 3D printer 500, comprising (a) a first printer head 501 comprising a printer nozzle 502, (b) a filament providing device 575 configured to provide a filament 321 comprising 3D printable material 201 to the first printer head 501, and optionally (c) a receiver item 550. In Figs. 1a-1b, the first or second printable material or the first or second printed material are indicated with the general indications printable material 201 and printed material 202, respectively. Directly downstream of the nozzle 502, the filament 321 with 3D printable material becomes, when deposited, layer 322 with 3D printed material 202.

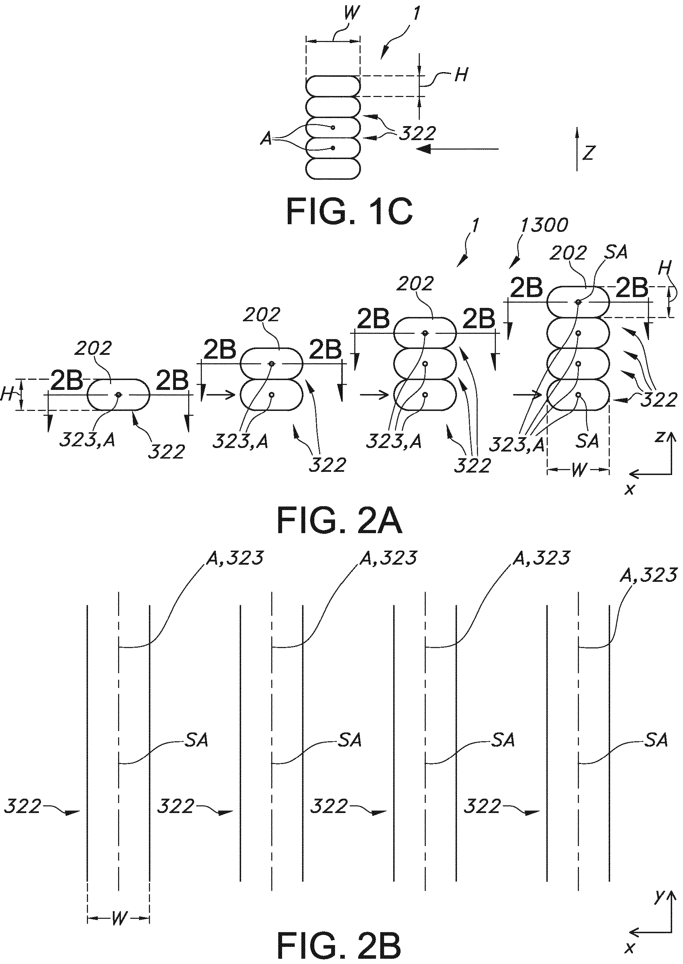

Fig. 1c schematically depicts a stack of 3D printed layers 322, each having a layer height H and a layer width W. Note that in embodiments the layer width and/or layer height may differ for two or more layers 322. Reference 252 in Fig. 1c indicates the item surface of the 3D item (schematically depicted in Fig. 1c).

Referring to Figs. 1a-1c, the filament of 3D printable material that is deposited leads to a layer having a height H (and width W). Depositing layer 322 after layer 322, the 3D item 1 is generated. Fig. 1c very schematically depicts a single-walled 3D item 1.

Fig. 2a schematically depicts the layer-wise deposition by 3D printing of layers 322 of 3D printed material 202. From left to right, it is shown that a stack of 4 layers is provide. The layer height is indicated with reference H and the layer width with reference W. Each layer has an axis of elongation A of the layer of 3D printed material 202. Note that these axes may also be curved. Further, reference 323 indicates a respective print path, which in these embodiments essentially coincide. Note that the stack may provide a face wherein all print paths 323 and/or axes of elongation A are comprised. Reference SA indicates a stack axis of a layer 322; each layer may comprise a stack axis. The stack axis may in embodiments be essentially parallel, though this is not necessarily the case. As can be seen on the right, the stack axes SA may define a cross-sectional plane. In embodiments, this plane may be planar, but in other embodiments this plane may be non-planer (i.e. a 1D or 2D curve plane). A cross-section is made of each upper layer, which cross-sections are schematically depicted in Fig. 2b. In fact, these cross-sections are projections on an xy plane (or are projected on an xy-plane). Note that each projection is essential identical. Further, note that in fact it is assumed that for these embodiments the layers are essentially on top of each other and are not curved.

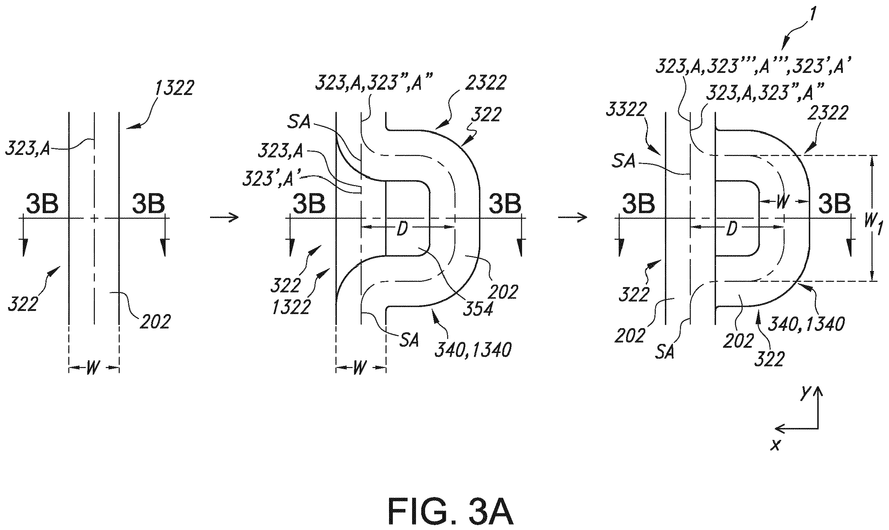

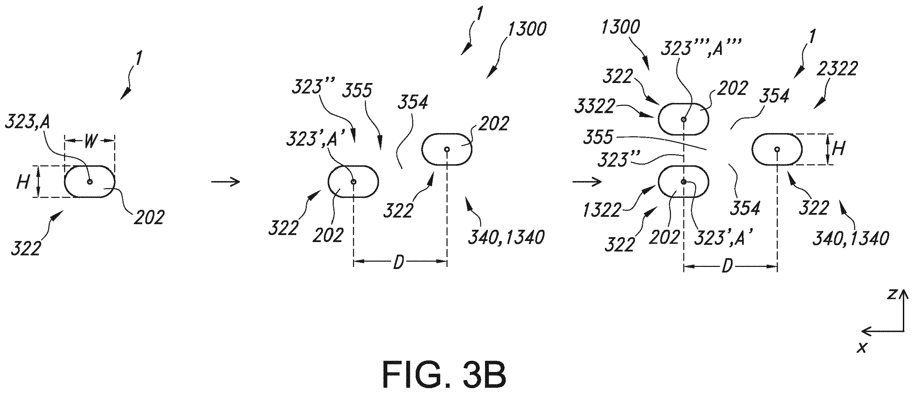

Fig. 3a schematically depicts an embodiment of a stack of three layers being 3D printed, with on the left a single layer, in the middle a further layer on the first single layer, and on the right yet a further layer on the further layer on the first single layer. Cross-sections in an xz-plane are schematically depicted in Fig. 3b. To discriminate between layers, the indices ', ", and '" are applied. Fig. 3a is a top view, but can basically also be used as projection on the xy-plane of at the first layer (left embodiments) and at least the upper layer (middle and right embodiment).

Figs. 3a-3b schematically depict a method for producing a 3D item 1 by means of fused deposition modelling. The method comprising a 3D printing stage comprising layer-wise depositing 3D printable material 201 to provide the 3D item 1 comprising 3D printed material 202. The 3D item 1 comprises a plurality of layers 322 of 3D printed material 202. Especially, the plurality of layers 322 comprises a stack 1300 of a first layer 1322 and a second layer 2322, which are configured adjacent to each other. Especially, the method comprises 3D printing the first layer 1322 and subsequently the second layer 2322 along respective print paths 323 while providing one or more print path deviations 340 in an xy-plane in at least one of the first and second layers 1322,2322 relative the (respective) the print path 323. Thereby, one or more openings 354 between the first and second layers 1322,2322 are defined.

As schematically depicted, the layers 322 have a layer width W. The one or more print path deviations 340 have an amplitude D (especially relative to the (respective) print path 323). In specific embodiments W<D≤10^{∗}W, even more especially W<D≤10^{∗}W. Further, in specific embodiments, the one or more deviations have deviation widths W1 at half amplitudes D, wherein especially 0.1^{∗}W≤W1≤20^{∗}W.

In embodiments, the method comprises a continuous 3D printing of the at least one of the first and second layers 1322,2322 with the one or more print path deviations 340.

In this way, a 3D item 1 is provided, comprising 3D printed material 202. The 3D item 1 comprises a plurality of layers 322 of 3D printed material 202. The plurality of layers 322 comprises a stack 1300 of a first layer 1322 and a second layer 2322, which are configured adjacent to each other. Relative to a projection on an xy-plane of the first and second layers 1322,2322 at least one of the first and second layers 1322,2322 defines one or more layer deviations 1340 protruding relative to the other of the first and second layers 1322,2322. In this way, one or more openings 354 between the first and second layers 1322,2322 are defined. As indicated above, the layers 322 have a layer width W. Further, the at least one of the first and second layers 1322,2322 defining one or more layer deviations 1340 comprises a stack axis SA in the projection on the xy-plane. Especially, the one or more deviations 1340 have an amplitude D relative to the stack axis SA in the projection on the xy-plane SA. In specific embodiments W<D≤10^{∗}W, even more especially W<D≤10^{∗}W.

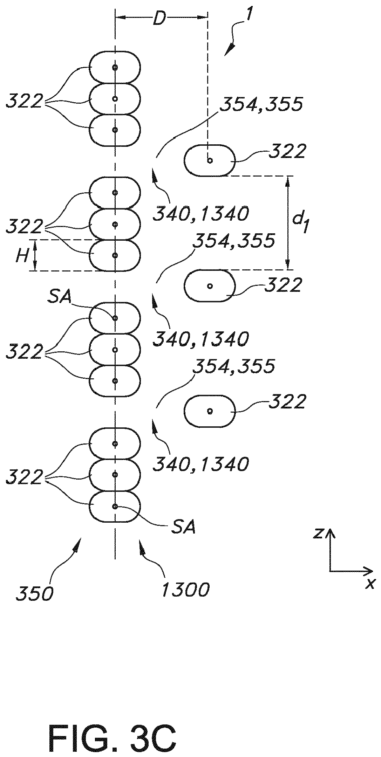

Fig. 3c schematically depicts a stack 1300 in cross-sectional view comprising a plurality of layers 322 and a plurality of openings 354. Reference 355 indicates channel, which are provided between the two opposite sides of the 3D item 1 or of the stack 1300. Fig. 3c thus also schematically depicts an embodiment of the 3D item 1 comprising an item wall 350, wherein the item wall 350 comprises the plurality of layers 322 of 3D printed material 202, wherein the item wall 350 comprises a plurality of openings 354 between both sides of the item wall 350, wherein the plurality of openings 354 are at least partly defined by a plurality of layer deviations 1340.

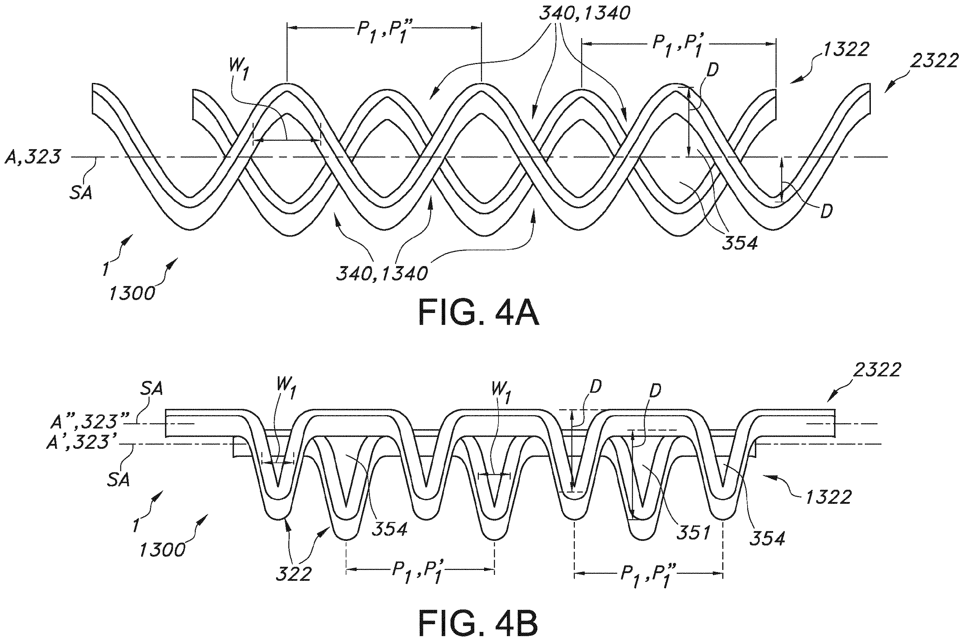

Hence, amongst others in embodiments a method is suggested herein for giving to the surface of the printed item a fabric/ knitwear appearance. For this purpose, it is suggested using printing strategies where the printer head moves continuously without stopping along a smooth line while oscillating in the print plane (xy) about the line. When the oscillations in successive layers are chosen to be out of phase then the successive layers contact each other only at crossing points this. This leads to a relatively open structure as shown in Fig. 4a with loops on both surfaces. However, oscillations may in embodiments not be symmetrical and oscillations may in embodiments only be from one side then loops are formed only on one of the surfaces while the other surface looks porous, such as a schematically depicted embodiment in Fig. 4b (see further below).

Figs. 4a-4b also schematically depicts embodiments of methods comprising 3D printing at least one of the first and second layers 1322,2322 with a plurality of deviations 340, wherein (i) two or more of the print path deviations 340 are configured symmetrical relative to the (respective) print path 323, and/or (ii) two or more of the print path deviations 340 are configured asymmetrical relative to the (respective) print path 323. Further, Figs. 4a-4b also schematically depicts embodiments of methods comprising 3D printing at least one of the first and second layers 1322,2322 with a plurality of print path deviations 340 in one or more of a block-shape way, in a zig-zag way, and in a meandering way. Yet further, Figs. 4a-4b also schematically depicts embodiments of methods wherein the layers 322 have a layer width W, wherein the method comprises 3D printing at least one of the first and second layers 1322,2322 with a plurality of print path deviations 340 having a first pitch PI, and wherein 2^{∗}W≤P1≤20^{∗}W. In the figures, the indications ' and " are used to distinguish between two pitches (which do not necessarily have different values).

Figs. 4a-4b also schematically depicts embodiments of methods comprising 3D printing two or more layers 322 each with a plurality of print path deviations 340, wherein the print path deviations 340 of at least two of the two or more layers 322 are shifted relative to each other.

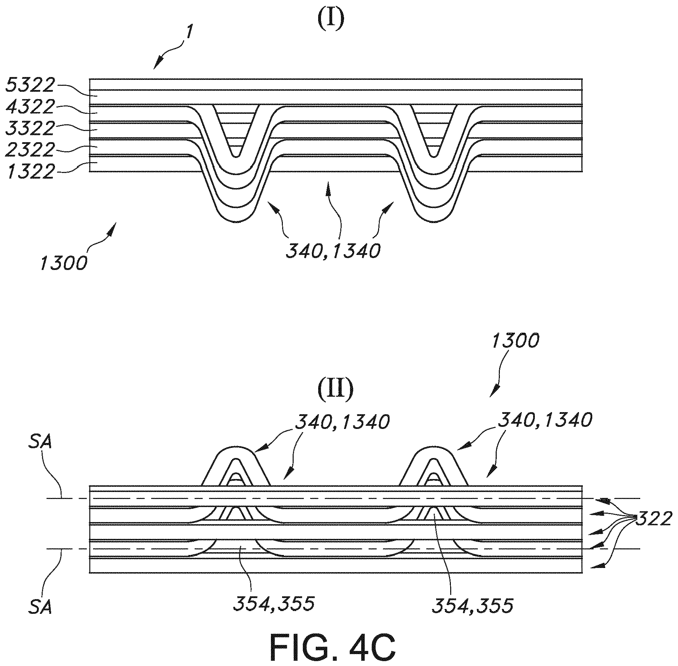

Fig. 4c shows a front view (I) and back side view (II) of an embodiment wherein alternating layers comprise the deviations 340.

Hence, Figs. 4a-4c (also) schematically depicts embodiments of methods comprising 3D printing two or more layers 322 each with a plurality of print path deviations 340, wherein the layers have a layer height H, wherein for a set of two layers 322, which are nearest neighboring layers 322 of each other, each with the plurality of print path deviations 340, applies one or more of: (i) the deviations of both of the layers 322 have a same first pitch PI, but the print path deviations 340 of the layers 322 are shifted relative to each other, and (ii) nearest neighboring print path deviations 340 in different layers 322 of the set of two layers 322 have a mutual distance d1 of at least the layer height H.

Fig. 4c may e.g. be the result when the layer height is almost the same as the diameter of nozzle a porous structure is obtained.

In specific embodiments, the amplitude of the oscillation A is large enough to produce loops but not too large to give the surface an untidy appearance. In yet more specific embodiments, the width (W) of the printed layer may especially satisfy the following condition W<A<3W. Such a way of printing can lead to a perforated structure as the loops can lead to the formation of holes. Size of the holes can also be altered by adjusting the printing strategy.

Note that in the embodiments schematically depicted in Figs 4a-4c the stack axes may essentially provide a planar plane. Hence, an essentially flat wall element may be provided with opening due to the presence of deviations which extend from the planar plane.

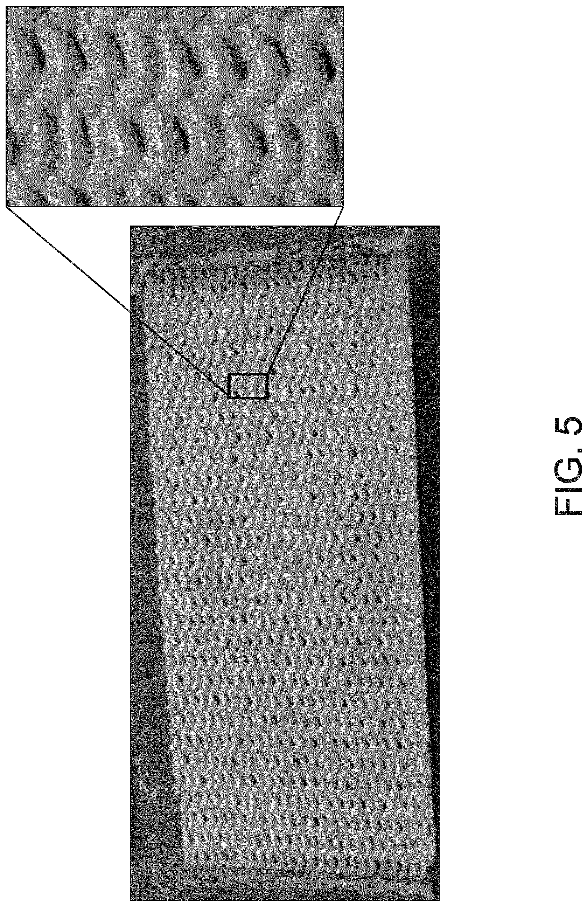

Fig. 4c and Fig. 5 schematically depict embodiments of methods wherein the 3D item 1 comprises an item wall 350, wherein the item wall 350 comprises the plurality of layers 322 of 3D printed material 202, wherein the method comprises providing a plurality of layers 322 with a plurality of print path deviations 340 in a regular arrangement to provide a regular arrangement of openings 354 between both sides of the item wall 350. Hence, amongst others embodiments are depicted wherein the layers have a layer height H, wherein for a set of two layers 322 each with the plurality of layer deviations 1340 which are nearest neighboring layers 322 of each other applies one or more of: i the layer deviations 1340 of both of the layers have a same first pitch PI, but the layer deviations 1340 of the layers 322 are shifted relative to each other, and ii nearest neighboring layer deviations 1340 in different layers of the set of two layers 322 have a mutual distance d1 of at least the layer height H.

Fig. 5 schematically depicts an embodiment showing the frontside of such a print with loops sagging downwards. It can be seen that both surfaces are quite porous. In order to reduce the porosity, the layer height is set to be less than half the diameter of the printer nozzle. Furthermore, several layers including a straight layer are printed on top of each other before the structure is shifted. This leads to the squeezing of the layers on top of each other while the loops free to have the diameter of the nozzle. This is schematically shown in Fig. 4c where the layer thickness was assumed to be about the same as the radius of the nozzle.

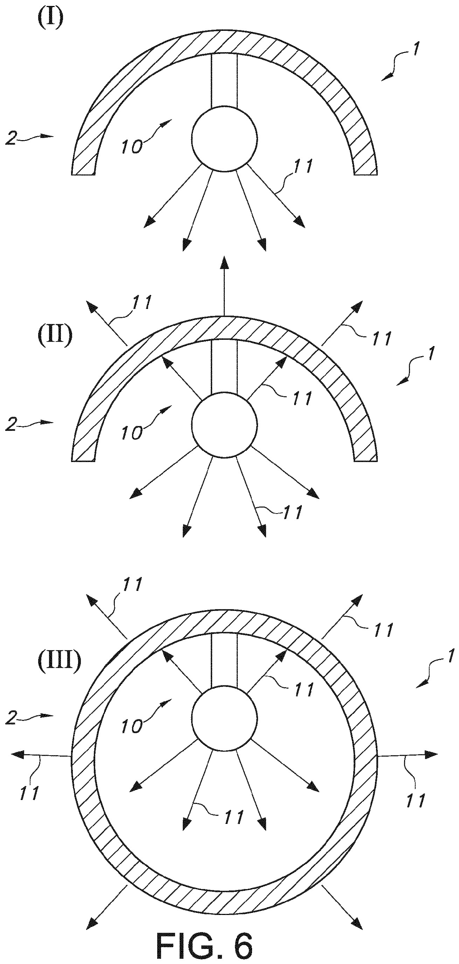

Fig. 6 schematically depicts an embodiment of a lamp or luminaire, indicated with reference 2, which comprises a light source 10 for generating light 11. The lamp may comprise a housing or shade or another element, which may comprise or be the 3D printed item 1 (of which several embodiments are described above). Here, the half sphere (in cross-sectional view) schematically indicates a housing or shade. The lamp or luminaire may be or may comprise a lighting device (which comprises the light source 10). Therefore, the term lighting device may refer to a lamp or a luminaire, and may thus be indicated with reference 2. Hence, in specific embodiments the lighting device comprises the 3D item 1. The 3D item 1 may be configured as one or more of (i) at least part of a lighting device housing, (ii) at least part of a wall of a lighting chamber, and (iii) an optical element. Hence, the 3D item may in embodiments be reflective for light source light 11 and/or transmissive for light source light 11. Here, the 3D item may e.g. be a housing or shade. The housing or shade comprises the item part 400. For possible embodiments of the item part 400, see also above. Fig. 6 schematically depict several embodiments, wherein in the first embodiment I, the transmissivity of the 3D item 1 is relatively small, and in the other embodiments II and III, the transmissivity is larger.

In embodiments, the 3D item may comprise alternating printed levels, wherein the first 3D printed level comprises surface loops, and the second 3D printed level comprises no 3D printed loops (i.e. a spacing). In embodiments, the 3D item may comprise alternating printed levels, wherein the first 3D printed level comprises surface loops, and the second 3D printed level comprises 3D printed loops (i.e. a spacing). In embodiments, the 3D item may comprise at least 10 surface loops per 3D printed level, more especially at least 13, most preferably at least 15.

In embodiments, the 3D item may comprise a regular pitch per 3D printed level. In embodiments, the 3D item may comprise a regular pitch for at least 10 3D printed levels, more preferably at least 13, most preferably at least 15.

In embodiments, the 3D item may comprise a first 3D printed level comprising surface loops having a first pitch, and a second 3D printed level comprising surface loops having a second pitch different from the first pitch.

In embodiments, the 3D item may comprise, the surface loops may be configured in phase. In other embodiments, the surface loops may be out of phase, but preferably shifted by ½ pitch

In embodiments, the 3D item may comprise a first 3D printed level comprising a first material, and a second 3D printed level comprising a second material different from the first material.

In embodiments, the 3D item may comprise a first 3D printed level comprising a first color, and a second 3D printed level comprising a second color different from the first color.

In embodiments, the pitch P may be preferably W<P<3W, more especially 1.2W<P<2.7W, most especially 1.5W<P<2.5W such as for example P=2.

In embodiments, the 3D item may comprise at least 1 layer of 4 neighboring layers comprising surface loops, more especially at least 2 layer of 4 neighboring layers comprises surface loops, such as in specific embodiments at least 3 layer of 4 neighboring layers comprises surface loops, such as for example 4 neighboring layers comprises surface loops.

In embodiments, at least two layers may comprise surface loops having different shape, and/or a different width, and/or a different amplitude.

The term "plurality" refers to two or more.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%.

The term "comprise" includes also embodiments wherein the term "comprises" means "consists of'.

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

The invention further applies to a device, apparatus, or system comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

It goes without saying that one or more of the first (printable or printed) material and second (printable or printed) material may contain fillers such as glass and fibers which do not have (to have) influence on the on T_{g} or Tₘ of the material(s).

Amongst others, the invention provides in embodiments a method wherein 3D printed layers are stacked, but wherein at one or more positions one layer is shifted sideways relative to the other. It may look like a (small) excursion. Hence, the one layer deviates sideways from the layer below and returns back on the layer below. This may be over a relatively small length. The excursion is chosen such, that there is an opening between the lower layer and the layer that deviates sideways. In this way, a 3D printed item comprising a stack of layers may have (physical) openings, which allow transmission of light. In general, the layer height of the layers is not adapted. The deviations or excursions may be provided in a regular way. This may provide a 3D printed with a regular arrangement of openings. Note that not each layer of the 3D printed item necessarily includes such deviations or excursions.

## Claims

1. A method for producing a 3D item (1) by means of fused deposition modelling, the method comprising a 3D printing stage comprising layer-wise depositing 3D printable material (201) to provide the 3D item (1) comprising 3D printed material (202), wherein the 3D item (1) comprises a plurality of layers (322) of 3D printed material (202), wherein the plurality of layers (322) comprises a stack (1300) of a first layer (1322) and a second layer (2322), which are configured adjacent to each other, wherein the method comprises:
- 3D printing the first layer (1322) and subsequently the second layer (2322) along print paths (323) while providing one or more print path deviations (340) in an xy-plane in at least one of the first and second layers (1322,2322) relative to the print path (323), thereby defining one or more openings (354) between the first and second layers (1322,2322).

2. The method according to claim 1, wherein the layers (322) have a layer width (W), wherein the one or more print path deviations (340) have an amplitude (D) relative to the print path (323), and wherein W<D≤10^{∗}W, wherein the one or more deviations have deviation widths (W1) at half amplitudes (D), wherein 0.1^{∗}W≤W1≤20^{∗}W.

3. The method according to any one of the preceding claims, comprising 3D printing at least one of the first and second layers (1322,2322) with a plurality of deviations (340), wherein (i) two or more of the print path deviations (340) are configured symmetrical relative to the print path (323), and/or (ii) two or more of the print path deviations (340) are configured asymmetrical relative to the print path (323).

4. The method according to any one of the preceding claims, comprising 3D printing at least one of the first and second layers (1322,2322) with a plurality of print path deviations (340) in one or more of a block-shape way, in a zig-zag way, and in a meandering way.

5. The method according to any one of the preceding claims, wherein the layers (322) have a layer width (W), wherein the method comprises 3D printing at least one of the first and second layers (1322,2322) with a plurality of print path deviations (340) having a first pitch PI, and wherein 2^{∗}W≤P1≤20^{∗}W.

6. The method according to any one of the preceding claims, comprising 3D printing two or more layers (322) each with a plurality of print path deviations (340), wherein the print path deviations (340) of at least two of the two or more layers (322) are shifted relative to each other.

7. The method according to any one of the preceding claims, comprising 3D printing two or more layers (322) each with a plurality of print path deviations (340), wherein the layers have a layer height (H), wherein for a set of two layers (322), which are nearest neighboring layers (322) of each other, each with the plurality of print path deviations (340), applies one or more of: (i) the deviations of both of the layers (322) have a same first pitch PI, but the print path deviations (340) of the layers (322) are shifted relative to each other, and (ii) nearest neighboring print path deviations (340) in different layers (322) of the set of two layers (322) have a mutual distance (d1) of at least the layer height (H).

8. The method according to any one of the preceding claims, wherein the 3D item (1) comprises an item wall (350), wherein the item wall (350) comprises the plurality of layers (322) of 3D printed material (202), wherein the method comprises providing a plurality of layers (322) with a plurality of print path deviations (340) in a regular arrangement to provide a regular arrangement of openings (354) between both sides of the item wall (350).

9. The method according to any one of the preceding claims, wherein the method comprises a continuous 3D printing of the at least one of the first and second layers (1322,2322) with the one or more print path deviations (340).

10. A 3D item (1) comprising 3D printed material (202), wherein the 3D item (1) comprises a plurality of layers (322) of 3D printed material (202), wherein the plurality of layers (322) comprises a stack (1300) of a first layer (1322) and a second layer (2322), which are configured adjacent to each other, wherein relative to a projection on an xy-plane of the first and second layers (1322,2322) at least one of the first and second layers (1322,2322) defines one or more layer deviations (1340) protruding relative to the other of the first and second layers (1322,2322), thereby defining one or more openings (354) between the first and second layers (1322,2322).

11. The 3D item (1) according to claim 10, wherein the layers (322) have a layer width (W), wherein the at least one of the first and second layers (1322,2322) defining one or more layer deviations (1340) comprises a stack axis (SA) in the projection on the xy-plane, wherein the one or more deviations (1340) have an amplitude (D) relative to the stack axis (SA) in the projection on the xy-plane (SA), wherein W<D≤10^{∗}W.

12. The 3D item (1) according to claim 11, wherein the at least one of the first and second layers (1322,2322) comprises a plurality of layer deviations (1340); wherein two or more of the layer deviations (1340) are configured symmetrical relative to the stack axis (SA), and/or wherein two or more of the layer deviations (1340) are configured asymmetrical relative to the stack axis (SA); wherein a plurality of the layer deviations (1340) are configured in one or more of a block-shape arrangement, in a zig-zag arrangement, and in a meandering arrangement; wherein the plurality of the layer deviations (1340) have a first pitch PI, and wherein W≤P1≤5^{∗}W.

13. The 3D item (1) according to any one of the preceding claims 10-12, wherein two or more layers (322) each comprise a plurality of layer deviations (1340), wherein the layers have a layer height (H), wherein for a set of two layers (322) each with the plurality of layer deviations (1340) which are nearest neighboring layers (322) of each other applies one or more of: (i) the layer deviations (1340) of both of the layers have a same first pitch PI, but the layer deviations (1340) of the layers (322) are shifted relative to each other, and (ii) nearest neighboring layer deviations (1340) in different layers of the set of two layers (322) have a mutual distance (d1) of at least the layer height (H).

14. A lighting device (2) comprising the 3D item (1) according to any one of the preceding claims 10-13, wherein the 3D item (1) is configured as one or more of (i) at least part of a lighting device housing, (ii) at least part of a wall of a lighting chamber, and (iii) an optical element.

15. The lighting device (2) according to claim 14, wherein the 3D item (1) comprises an item wall (350), wherein the item wall (350) comprises the plurality of layers (322) of 3D printed material (202), wherein the item wall (350) comprises a plurality of openings (354) between both sides of the item wall (350), wherein the plurality of openings (354) are at least partly defined by a plurality of layer deviations (1340).
